(19) Europäisches Patentamt
European Patent Office
Office européen des brevets

(11) Veröffentlichungsnummer: **0 315 035 B1**

(12) # EUROPÄISCHE PATENTSCHRIFT

(45) Veröffentlichungstag der Patentschrift: **12.05.93**

(51) Int. Cl.5: **C08L 69/00**, //(C08L69/00, 51:08)

(21) Anmeldenummer: **88117804.0**

(22) Anmeldetag: **26.10.88**

(54) **Mischungen von Polycarbonaten mit siloxanhaltigen Pfropfpolymerisaten.**

(30) Priorität: **06.11.87 DE 3737637**

(43) Veröffentlichungstag der Anmeldung:
**10.05.89 Patentblatt 89/19**

(45) Bekanntmachung des Hinweises auf die Patenterteilung:
**12.05.93 Patentblatt 93/19**

(84) Benannte Vertragsstaaten:
**DE ES FR GB IT NL**

(56) Entgegenhaltungen:
**EP-A- 0 089 540**
**EP-A- 0 260 558**
**EP-A- 0 279 261**
**FR-A- 2 376 189**

(73) Patentinhaber: **BAYER AG**

**W-5090 Leverkusen 1 Bayerwerk(DE)**

(72) Erfinder: **Wittmann, Dieter, Dr.**
**Doerperhofstrasse 15**
**W-4150 Krefeld 1(DE)**
Erfinder: **Lindner, Christian, Dr.**
**Riehlerstrasse 200**
**W-5000 Köln 60(DE)**
Erfinder: **Damrath, Volker, Dr.**
**Dierath 26**
**W-5093 Burscheid(DE)**
Erfinder: **Kress, Hans-Jürgen, Dr. c/o Mobay Corporation**
**Plastics and Rubber Division Building 8**
**Mobay Road Pittsburgh, PA 15205(US)**
Erfinder: **Peters, Horst, Dr.**
**Winterberg 25**
**W-5090 Leverkusen 3(DE)**
Erfinder: **Schoeps, Jochen, Dr.**
**Windmühlenstrasse 126**
**W-4150 Krefeld 1(DE)**

EP 0 315 035 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Mischungen von thermoplastischen Polycarbonaten mit Pfropfpolymerisaten sind lange bekannt. Je nach Aufbau der Pfropfpolymerisate sind jedoch noch Verbesserungen der Alterungs- beziehungsweise Witterungsbeständigkeit einerseits oder der Schlagfestigkeit bei tiefen Temperaturen andererseits wünschenswert, um einen Außeneinsatz, vor allem im Automobilsektor, noch mehr zu begünstigen.

Gemäß EP-OS 0135 794 besteht eine Modifizierung der Polycarbonatkomponente durch den Einbau von Siloxanblöcken in die Polycarbonatkomponente, wodurch vor allem eine Verbesserung der Zähigkeit, vor allem bei tiefen Temperaturen sowie eine Verbesserung des Brandverhaltens erreicht wird (siehe beispielsbeise Seite 15 der EP-OS 0135 794). Es bestehen jedoch trotz guter Tieftemperaturzähigkeit gewisse Nachteile, herrührend von den jeweils verwendeten Pfropfpolymerisatkomponenten.

Gemäß EP-OS 0 022 979 beziehungsweise US-Patent 4305 856 werden Polycarbonat-ABS-Mischungen beschrieben, die Mengen von 0,05 bis 3 Gew.-% eines Silikons zum Zweck der besseren Entformbarkeit zugesetzt enthalten.

Aus der DE-OS 2 659 357 sind schlagzähe, thermoplastische Formmassen bekannt, die auf 100 Gewichtsteile eines thermoplastisch verarbeitbaren Kunststoffs, beispielsweise Polycarbonat, 1 bis 50 Gewichtsteile eines kautschukelastischen Pfropfcopolymeren enthalten, welches durch Polymerisation von ungesättigten Monomeren in Gegenwart von Organopolysiloxanen und/oder Silikon-Kautschuken hergestellt wurden.

Die Formmassen besitzen gemäß DE-OS 26 59 357 hohe Kälteschlagzähigkeit bei gleichzeitig guter Witterungs- und Alterungsbeständigkeit, hoher Oberflächengüte, reiner Eigenfarbe und hoher Farbstabilität, ohne daß dabei die ursprünglichen Eigenschaften der thermoplastisch verarbeitbaren Kunststoffe wesentlich beeinträchtigt werden (Seite 3, letzter Absatz der DE-OS).

Aus der EP-OS 0 034 748 sind ebenfalls kerbschlagzähe Polymerisate mit verbesserter Witterungsbeständigkeit bekannt, welche außerdem mit thermoplastischen Polycarbonaten und mit Polymethacrylaten abgemischt werden können [siehe EP-OS 0 089 540]. Derartige Formmassen haben jedoch für manche Anwendungen eine nicht ausreichende Tieftemperaturzähigkeit.

Es hat sich nun gezeigt, daß eine Optimierung des Eigenschaftsbildes bezüglich Tieftemperaturzähigkeit und Witterungs- beziehungsweise Alterungsbeständigkeit dadurch erreicht wird, daß man Pfropfpolymerisate von Silikonkautschuken einsetzt, die wiederum ihrerseits in Gegenwart eines kautschukartigen Polymerisats hergestellt sind, welches eine Erweichungstemperatur (Glastemperatur) von < 0 °C, vorzugsweise < -20 °C und insbesondere < -40 °C, hat.

Gegenstand der vorliegenden Erfindung sind somit thermoplastische Polycarbonatformmassen, enthaltend

A) 52 bis 94 Gew.-%, vorzugsweise 60 bis 86 Gew.-%, eines oder mehrerer Polycarbonate und

B) 6 bis 48 Gew.-%, vorzugsweise 14 bis 40 Gew.-% eines oder mehrerer teilchenförmigen Pfropfpolymerisate, die dadurch gekennzeichnet sind, daß die Pfropfpolymerisate hergestellt sind aus

B.1 20 bis 90 Gew.-Teilen, vorzugsweise 30 bis 80 Gew.-Teilen, besonders bevorzugt 45 bis 75 Gew.-Teilen einer Polymerisat-Pfropfauflage aus wenigstens einem $\alpha,\beta$-ungesättigten, olefinischen Monomer auf

B.2 80 bis 10 Gew.-Teile, vorzugsweise 70 bis 20 Gew.-Teile, besonders bevorzugt 55 bis 25 Gew.-Teile einer Pfropfgrundlage mit Kern/Mantel-Struktur, bestehend aus einem Kern

a) aus kautschukartigem Polymerisat aus olefinisch ungesättigten Monomeren mit einer Glastemperatur (Tg) < 0 °C, vorzugsweise < -20 °C, besonders bevorzugt < -40 °C, und einem Hüllenpolymerisat (Mantel),

b) aus Organopolysiloxan, wobei das Gewichtsverhältnis des Kerns a) zur Hülle b) 0,1 : 99,9 bis 90 : 10, bevorzugt 10 : 90 bis 50 : 50, beträgt, und wobei die Pfropfpolymerisate B) einen mittleren Teilchendurchmesser ($d_{50}$) von 0,05 bis 10 $\mu$m, bevorzugt 0,1 bis 2 $\mu$m und besonders bevorzugt 0,1 bis 1 $\mu$m besitzen, und wobei die Summe der Gew.-Teile aus B.1 und B.2 stets 100 Gew.-Teile ergibt.

Polycarbonate gemäß Komponente A) sind thermoplastische, aromatische Polycarbonate, die durch Umsetzung von Diphenolen, insbesondere von Dihydroxydiarylalkanen, mit Phosgen oder Diestern der Kohlensäure erhalten werden, wobei außer den unsubstituierten Dihydroxydiarylalkanen auch solche geeignet sind, deren Arylreste in o- und/oder m-Stellung zur Hydroxylgruppe Methylgruppen oder Halogenatome tragen. Ebenso sind verzweigte Polycarbonate geeignet.

Die Polycarbonate gemäß Komponente A. haben mittlere Gewichtsmittel-Molekulargewichte $\overline{M}w$ zwischen 10.000 und 200.000, vorzugsweise zwischen 20.000 und 80.000, ermittelt z. B. durch Ultrazentrifugation oder Streulichtmessung.

Geeignete Diphenole sind z. B. Hydrochinon, Resorcin, 4,4'-Dihydroxydiphenyl, Bis-(Hydroxy-phenyl)-alkane wie beispielsweise $C_1-C_8$-Alkylen- bzw. $C_2-C_8$-Alkylidenbisphenole, Bis-(hydroxy-phenyl)-cycloalkane wie beispielsweise $C_5-C_{15}$-Cycloalkylen- bzw. $C_5-C_{15}$-Cycloalkylidenbisphenole, Bis-(hydroxy-phenyl)-sulfide, -ether, -ketone, -sulfoxide oder -sulfone. Ferner $\alpha,\alpha$-Bis-(hydroxy-phenyl)-diisopropylbenzol sowie die entsprechenden kernalkylierten bzw. kernhalogenierten Verbindungen. Bevorzugt sind Polycarbonate auf Basis Bis-(4-hydroxy-phenyl)-propan-2,2 (Bisphenol A), Bis-(4-hydroxy-3,5-dichlor-phenyl)-propan-2.2 (Tetrachlorbisphenol A), Bis-(4-hydroxy-3,5-dibrom-phenyl)-propan-2.2(Tetrabrombisphenol A), Bis-(4-hydroxy-3,5-dimethyl-phenyl)-propan-2.2 (Tetramethylbisphenol A), Bis-(4-hydroxy-phenyl)-cyclohexan-1.1 (Bisphenol Z) sowie auf Basis von Dreikernbisphenolen wie $\alpha,\alpha$-Bis-(4-hydroxy-phenyl)-p-diisopropylbenzol.

Weitere für die Herstellung der Polycarbonate geeignete Diphenole sind in den US-Patenten 2 970 131, 2 991 273, 2 999 835, 2 999 846, 3 028 365, 3 062 781, 3 148 172, 3 271 367 und 3 275 601 beschrieben.

Die thermoplastischen, aromatischen Polycarbonate sind entweder literaturbekannt oder nach literaturbekannten Verfahren erhältlich.

Die Pfropfpolymerisate B) sind Gegenstand der deutschen Patentanmeldung EP-A-296403 (welches als Stand der Technik im Sinne von Art.54(3)EPÜ angesehen wird) und die Pfropfgrundlage gemäß B.2 ist Gegenstand der deutschen Patentanmeldung EP-A-279261 (welches als Stand der Technik im Sinne von Art.54(3)EPÜ angesehen wird).

Gemäß EP-A-279261 haben die als Pfropfgrundlage B.2 dienenden Mehrphasenpolymerisate mittlere Teilchendurchmesser von 0,05 bis 10 $\mu$m, bevorzugt 0,1 bis 2 $\mu$m und insbesondere 0,1 bis 1 $\mu$m.

In EP-A-296403 ist die Herstellung der erfindungsgemäß einzusetzenden Pfropfpolymerisate B) über die Pfropfgrundlage B.2 beschrieben, aus der nachfolgende Passagen entnommen sind:

Die Kerne (a) aus kautschukartigem Polymerisat mit einer Erweichungstemperatur (Glastemperatur) kleiner 0 °C, bevorzugt kleiner -20 °C, besonders kleiner -40 °C, besitzen selbst mittlere Teilchendurchmesser ($d_{50}$) von 0,05 bis 2 $\mu$m, bevorzugt von 0,09 bis 0,5 $\mu$m. Sie können unvernetzt, teilvernetzt oder hochvernetzt sein; bevorzugt sind Teilchen aus wenigstens teilvernetztem Polymer. Das Kernmaterial (a) stellt ein kautschukartiges Homo- oder Interpolymerisat aus wenigstens einem olefinisch ungesättigten Monomeren dar, insbesondere einem Dien wie Butadien, Isopren, Chloropren, einem Olefin wie Ethylen, einem Vinylester wie Vinylacetat und Vinylpropionat sowie einem Alkylacrylat wie Ethyl-, Butyl-, Hexylacrylat, d.h., Monomeren, die zur Bildung eines kautschukartigen Polymeren befähigt sind, gegebenenfalls auch zusammen mit anderen Monomeren wie Styrol, Acrylnitril, Alkylmethacrylat, Acrylsäure, Methacrylsäure, Acrylamiden, $\alpha$-Methylstyrolen; bevorzugte Kernmaterialien sind Olefinkautschuke und Alkylacrylatkautschuke.

Das Material der Hülle (b) gemäß EP-A-296403 ist ein Homo- oder Interpolymerisat von Organopolysiloxanen, die im wesentlichen aus Einheiten der allgemeinen Formel

$$R_nSiO_{\frac{4-n}{2}} \quad (I)$$

aufgebaut sind, wobei R einen einwertigen organischen Rest darstellt und n einen Durchschnittswert von 1 bis weniger als 3 hat.

R kann ein einwertiger Kohlenwasserstoffrest, z.B. ein Alkylrest mit 1 bis 18 C-Atomen sein, z.B. Methyl, Ethyl oder ein Arylrest mit 6 bis 10 C-Atomen wie Phenyl. R kann auch ein einwertiger mit Radikalen reaktiver Kohlenwasserstoffrest sein, insbesondere Vinyl, Allyl, Chloralkyl, Mercaptoalkyl, Acryloxypropyl. Bevorzugt sind mindestens 80 % aller Reste R Methylgruppen.

Die in den Pfropfpolymerisaten gemäß EP-A-296403 enthaltenden Pfropfauflagen (c) sind Polymerisate von $\alpha,\beta$-ungesättigten Monomeren, vorzugsweise von Vinylmonomeren. Geeignete Monomere sind z.B. Styrol, $\alpha$-Methylstyrol, p-Methylstyrol, Halogenstyrol, Acrylnitril, Methacrylnitril, Vinylhalogenide (Vinylchlorid), Maleinimide, Maleinsäurederivate, Vinylacetat, Vinylpropionat, (Meth)Acrylsäurealkylester (mit bis zu 10 C-Atomen im Alkoholteil), Vinylether, konjugierte Diene, wie butadien, Chloropren und $\alpha$-Olefine wie Ethylen, Propen, Buten. Besonders bevorzugt sind Styrol, Acrylnitril, Propen, Ethylen und Buten.

Die Pfropfauflage (c) können Homopolyermisate oder Copolymerisate aus wenigstens zwei der genannten Monomeren sein.

Die Pfropfauflage (c) liegt wenigstens teilweise auf dem Silikonkautschuk pfropfpolymerisiert, d.h. chemisch gebunden vor. In bevorzugten Pfropfpolymerisaten ist mehr als 50 Gew.-% der Pfropfauflage chemisch an die Pfropfgrundlage gebunden (pfropfpolymerisiert).

Die Pfropfpolymerisate gemäß EP-A-296403 sind wie folgt herstellbar:
In einer ersten Stufe wird eine Emulsion des Kernmaterials (a) hergestellt nach an sich bekannten Verfahren, durch Dispersionspolymerisation des oder der entsprechenden Monomeren. Bevorzugt werden Monomere in Gegenwart oberflächenaktiver Stoffe und gegebenenfalls Initiatoren in wäßriger Emulsion polymerisiert. Durch Variieren der Polymerisationsbedingungen lassen sich die Teilchendurchmesser der Polymerisate einstellen. Die Emulsionspolymerisation wird normalerweise bei 10 bis 100°C durchgeführt. Bevorzugte Emulsionen des Kernmaterials (a) besitzen einen pH-Wert kleiner 7 und werden mit anionischen Emulgatoren, insbesondere Salzen von Sulfonsäuren oder organischen Sulfaten hergestellt. Insbesondere durch das Monomer/Emulgator/Wasser-Verhältnis lassen sich die Teilchendurchmesser der anfallenden Latices einstellen. Sollen die Kerne (a) wenigstens teilvernetzt sein, so können die das Kernmaterial bildenden Monomeren in Anwesenheit polyfunktioneller Vinyl- oder Allylmonomerer polymerisiert werden, insbesondere in Mengen von bis zu 5 Gew.-%, bezogen auf die Monomeren. Geeignete vernetzende Monomere sind z.B. Divinylbenzol, Bis-acrylate, Bis-acrylamide, Acrylsäurevinylester, Triallylcyanurat, -isocyanurat, -phosphat, - citrat, Butadien, Isopren.

In einer zweiten Stufe wird in Gegenwart der Emulsion des Kernmaterials (a) der ersten Stufe das Organopolysiloxan für die Hülle (b) durch Emulsionspolymerisation hergestellt, indem man niedermolekulare Organosiloxane in dem Latex aus Stufe 1 dispergiert und, gegebenenfalls in Gegenwart einer zum Erhalt einer stabilen Emulsion benötigten Menge Emulgator sowie eines Katalysators, polymerisiert. Dabei ist eine der Polymerisation vorangestellte Emulgierung der grob dispergierten Organosiloxane mit technischen Hilfsmitteln wie z.B. schnelllaufenden Rührwerken (Ultraturrax), Kolloidmühlen oder Hochdruckhomogenisatoren nicht erforderlich. Vielmehr ist bevorzugt, gleichzeitig zu emulgieren und zu polymerisieren. Dadurch wird überraschenderweise erreicht, daß das gebildete Organopolysiloxan auf das in der ersten Stufe hergestellte Kernmaterial (a) aufpolymerisiert.

Zur Erhöhung der Polymerisationsgeschwindigkeit kann die Reaktionstemperatur auf etwa 40 bis 100°C erhöht werden.

Die Teilchendurchmesser der Polymerisate der zweiten Stufe können ebenfalls durch Variieren der Polymerisationsbedingungen eingestellt werden, z.B. durch Verwendung nichtionischer Coemulgatoren, Einstellen des Emulgator/Organosiloxan-Verhältnissesund durch die Wahl von Kernmaterialien mit geeigneten Teilchendurchmessern.

Als Organosiloxane zur Herstellung von (b) kann man bekannte Verbindungen einsetzen. Hierzu gehören vor allem cyclische Organosiloxanoligomere, z.B. Octamethylcyclotetrasiloxan und Decamethylcyclopentasiloxan. Daneben sind Alkoxysilane und Alkoxysiloxane geeignet, wobei die Alkoxygruppe 1 bis 4 Kohlenstoffatome enthalten. Beispiele geeigneter Alkoxysilane sind Methyltriethoxysilan, 3-Aminopropyltrimethoxysilan und 3-Mercaptopropylmethyldimethoxysilan.

Für das Verfahren der Stufe 2 sind ferner Polysiloxane, insbesondere $\alpha,\omega$-Polysiloxandiole, eines Molekulargewichtes von 2000 bis 5000 und einer Viskosität von 50 bis 150 mPa.s bei 25°C geeignet.

Das Organopolysiloxan der Hülle (b) gemäß EP-A-296403 kann teilweise vernetzt sein. Verzweigungen oder Vernetzungen können durch Zugabe von z.B. Tetraethoxysilan oder eines Silans der allgemeinen Formel

$$R\ Si\ X_3 \quad (II),$$

wobei X eine hydrolysierbare Gruppe, insbesondere den Alkoxyrest darstellt, eingebaut werden. R hat die für (I) angegebene Bedeutung. Bevorzugt sind R = Methyl und R = Phenyl. Eine Vernetzung kann jedoch auch stattfinden, wenn z.B. gleichzeitig eingesetzte Vinyl- und Mercaptogruppen bei der Emulsionspolymerisation der Siloxanbestandteile miteinander reagieren; dann ist die Zugabe eines externen Vernetzers nicht erforderlich.

Als Emulgatoren werden bekannte nichtionogene und/oder anionenaktive Emulgatoren verwendet.

Beispiele für nichtionogene Emulgatoren sind Anlagerungsprodukte von Ethylenoxid an Verbindungen mit azidem Wasserstoff, wie Fettalkohole und Fettsäuren. Der HLB-Wert der Emulgatoren ist so auszuwählen, daß er in dem Bereich liegt, in dem die Bildung von O/W-Emulsionen begünstigt ist. Im allgemeinen werden Emulgatoren eines HLB-Wertes ≧ 10 verwendet. Geeignete nichtionogene Emulgiermitt 1 sind z.B. POE (3)-Laurylalkohol, POE (20-Oleylalkohol, POE (7)-Nonylphenol oder POE (10)-Stearat. Die Schreibweise POE (3)-Laurylalkohol bedeutet, daß an ein Molekül Laurylalkohol 3 Einheiten Ethylenoxid angelagert sind, wobei die Zahl 3 einen Mittelwert darstellt; die übrigen Verbindungen sind

analog definiert.

Als anionaktive Emulgatoren können die Alkalisalze von Fettsäuren oder die Alkali-, Erdalkali- oder Aminsalze von organischen Sulfonsäuren, insbesondere Alkylarylsulfonsäuren, verwendet werden. Beispiele hierfür sind das Natriumsalz der Dodecylbenzolsulfonsäure und der Laurylsulfonsäure. Es ist möglich, Mischungen von nichtionogenen Emulgatoren mit anionenaktiven Emulgatoren zu verwenden.

Als Katalysatoren werden Säuren, insbesondere grenzflächenaktive Säuren, verwendet.

Beispiele für Katalysatoren sind Sulfonsäuren wie die Alkylsulfonsäuren oder Alkylarylsulfonsäuren, z.B. Dodecylbenzolsulfonsäure. Grundsätzlich können alle als Polymerisationsinitiatoren bekannten Säuren als Katalysator verwendet werden; grenzflächenaktive Säuren sind bevorzugt.

Bei der Polymerisation der Hülle (b) muß die Bildung neuer Teilchen möglichst verhindert werden. Der Emulsionsstabilisator muß in einer zur Oberflächenbedeckung der Teilchen gerade ausreichenden Menge vorhanden sein. Die Größe der Teilchen ist durch die Reaktionsführung in weiten Grenzen zu variieren. Verwendet man als Kernmaterial (a) einen agglomerierten Latex, so erhält man große Teilchen, die mehrere Kautschukteilchen enthalten können. Man kann die Polymerisation der Hülle (b) auch so führen, daß Teilchen mit Kern-Mantel-Struktur und gleichzeitig Teilchen aus reinem Organopolysiloxan erzeugt werden. Auch solche Mischungen können erfindungsgemäß unter besonderen Umständen Verwendung finden.

In einer dritten Stufe werden nun die die Pfropfauflage bildenden Monomeren in Anwesenheit des Kautschuks radikalisch pfropfpolymerisiert, insbesondere im Temperaturbereich von 40 bis 90 °C. Die Pfropfpolymerisation kann in Suspension, Dispersion oder Emulsion durchgeführt werden. Bevorzugt ist die kontinuierliche oder diskontinuierliche Emulsionspolymerisation unter Einsatz von Radikalinitiatoren (aus der Gruppe der Peroxide, Azoverbindungen, Hydroperoxide, Persulfate, Perphosphate) und gegebenenfalls anionischer Emulgatoren wie Carboniumsalze, Sulfonsäuresalze oder organischer Sulfate. Dabei bilden sich Pfropfpolymerisate mit hohen Pfropfausbeuten, d.h., ein großer Teil des sich bildenden Auflage-Polymerisats (c) wird an den Silikonkautschuk chemisch gebunden, d.h. aufgepfropft. Die spezielle Kautschukgrundlage (a + b) macht besondere Maßnahmen, die eine hohe Pfropfung ermöglichen, überflüssig.

Die so hergestellten Pfropfpolymerisate können nach bekannten Verfahren aufgearbeitet werden, z.B. durch Koagulation der Latices mit Elektrolyten (Salze, Säuren oder Gemische davon) und anschließende Reinigung und Trocknung.

Die thermoplastischen Pfropfpolymerisate gemäß EP-A-296403 zeichnen sich durch die Kombination vieler technisch wichtiger Kunststoffeigenschaften aus wie Alterungsstabilität; Thermostabilität, besonders bei Verarbeitung zu Formkörpern; Oberflächenbeschaffenheit in Formkörpern; Verarbeitbarkeit, Tieftemperaturzähigkeit, Bruchfestigkeit.

Die thermoplastischen Polycarbonate (Komponente A) können bis zur Hälfte, vorzugsweise bis zu einem Drittel, durch andere Thermoplasten C), vorzugsweise durch thermoplastische Copolymerisate C) aus

C.1 50 bis 95 Gew.-Teilen, vorzugsweise 60 bis 80 Gew.-Teilen Styrol, α-Methyl-Styrol, kernsubstituiertem Styrol, Methylmethacrylat oder Mischungen daraus und

C.2 50 bis 5 Gew.-Teilen, vorzugsweise 40 bis 20 Gew.-Teilen, (Meth)Acrylnitril, Methylmethacrylat, Maleinsäureanhydrid, N-substituiertem Maleinimid oder Mischungen daraus, wobei die Summe der Gew.-Teile aus C.1 und C.2 jeweils 100 beträgt, ersetzt sein.

Andere Thermoplasten sind solche, die von den Komponenten A) und B) verschieden sind.

Gegenstand der vorliegenden Erfindung sind somit auch Formmassen, enthaltend

A) 52 bis 94 Gew.-%, vorzugsweise 60 bis 86 Gew.-%, eines oder mehrerer Polycarbonate und

B) 6 bis 48 Gew.-%, vorzugsweise 14 bis 40 Gew.-%, eines oder mehrerer der erfindungsgemäß einzusetzenden Pfropfpolymerisate, wobei maximal die Hälfte der Gewichtsprozente, vorzugsweise ein Drittel der Gewichtsprozente der Komponente A) durch andere Thermoplasten C), vorzugsweise durch thermoplastische Copolymerisate C) ersetzt sind, die aus

C.1 50 bis 95 Gew.-Teilen, vorzugsweise 60 bis 80 Gew.-Teilen Styrol, α-Methyl-Styrol, kernsubstituiertem Styrol, Methylmethacrylat oder Mischungen daraus und

C.2 50 bis 5 Gew.-Teilen, vorzugsweise 40 bis 20 Gew.-Teilen (Meth)Acrylnitril, Methylmethacrylat, Maleinsäureanhydrid, N-substituiertem Maleinimid oder Mischungen daraus hergestellt sind, wobei die Summe der Gew.-Teile aus C.1 und C.2 jeweils 100 beträgt, und wobei die Summe der Gewichtsprozente aus den Komponenten A) + B) + C) jeweils 100 Gew.-% ist.

Bevorzugte Copolymerisate C) sind solche aus wenigstens einem Monomeren aus der Reihe Styrol, α-Methylstyrol, kernsubstituiertem Styrol gemäß C.1 mit wenigstens einem Monomeren aus der Reihe Acrylnitril, Methacrylnitril, Methylmethacrylat, Maleinsäureanhydrid, N-subst.-Maleinimid gemäß C.2.

Copolymerisate vom Typ C) entstehen auch bei der Pfropfpolymerisation zur Herstellung der Komponente B) als Nebenprodukte (siehe Seite 8 und Seite 13 der vorliegenden Anmeldung).

Die erfindungsgemäß einsetzbare Menge an Copolymerisat gemäß Komponente C) bezieht diese Nebenprodukte der Pfropfpolymerisation nicht mit ein.

Die Copolymerisate gemäß Komponente C) sind harzartig, thermoplastisch und kautschukfrei. Besonders bevorzugte Copolymerisate C) sind solche aus Styrol und/oder α-Methylstyrol mit Acrylnitril und gegebenenfalls mit Methylmethacrylat.

Besonders bevorzugte Gewichtsverhältnisse im thermoplastischen Copolymerisat C) sind 60 bis 80 Gew.-% C.1 und 40 bis 20 Gew.-% C.2.

Die Copolymerisate C) sind bekannt und lassen sich durch radikalische Polymerisation, insbesondere durch Emulsions-, Suspensions-, Lösungs- oder Massepolymerisation herstellen. Sie besitzen vorzugsweise Molekulargewichte $\overline{M}w$ (Gewichtsmittel, ermittelt durch Lichtstreuung oder Sedimentation) zwischen 15.000 und 200.000.

Die erfindungsgemäßen Polycarbonatformmassen können weitere, für die Komponenten A), B) oder C) bekannte Zusätze, wie Stabilisatoren, Pigmente, Entformungsmittel, Flammschutzmittel und/oder Antistatika in den üblichen Mengen enthalten.

Die erfindungsgemäßen Formmassen enthaltend die Komponenten A), B) und gegebenenfalls C), Stabilisatoren, Pigmente, Entformungsmittel, Flammschutzmittel und/oder Antistatika können hergestellt werden, indem man die Bestandteile in bekannter Weise vermischt und bei Temperaturen von 200 bis 330° C in übliche Vorrichtungen wie Innenknetern, Extrudern oder Doppelwellenschnecken, schmelzcompoundiert oder schmelzextrudiert.

Gegenstand der vorliegenden Erfindung ist somit auch ein Verfahren zur Herstellung von thermoplastischen Formmassen, enthaltend die Komponenten A), B) und gegebenenfalls C), Stabilisatoren, Pigmente, Entformungsmittel, Flammschutzmittel und/oder Antistatika, das dadurch gekennzeichnet ist, daß man die jeweiligen Bestandteile vermischt und dann bei Temperaturen von 200 bis 330° C in gebräuchlichen Vorrichtungen schmelzcompoundiert oder schmelzextrudiert.

Die Bestandteile können sukzessive oder simultan gemischt werden, sowohl bei etwa 20° C (Raumtemperatur) als auch bei höheren Temperaturen.

Die Formmassen der Erfindung können zur Herstellung von Formkörpern jeder Art verwendet werden. Insbesondere können Formkörper durch Spritzguß hergestellt werden. Beispiele für Formkörper sind: Gehäuseteile (z. B. für Haushaltsgeräte, wie Saftpressen, Kaffeemaschinen, Mixer), Abdeckplatten für Bauten und Automobilteile. Sie werden auch für elektrotechnische Geräte, z. B. Steckerleisten, eingesetzt, weil sie sehr gute elektrische Eigenschaften haben.

Formkörper können auch durch Tiefziehen aus vorher hergestellten Platten oder Folien hergestellt werden.

Teilchengröße bedeutet immer mittlerer Teilchendurchmesser $d_{50}$, ermittelt durch Ultrazentrifugenmessungen nach W. Scholten et al., Kolloid-Z. und Z. Polymere 250 (1972), 782 - 796.

## Beispiele

### Polycarbonate und Copolymerisate

A) lineares Polycarbonat auf Basis Bisphenol A mit einer relativen Lösungsviskosität $\eta_{rel}$ von 1,26 - 1,28, gemessen in $CH_2Cl_2$ bei 25° C und in einer Konzentration von 0,5 g / 100 ml.

C) Styrol/Acrylnitril-Copolymerisat mit einem Styrol/Acrylnitril-Verhältnis von 72 : 28 und einer Grenzviskosität von $(\eta)$ = 0,55 dl/g (Messung in Dimethylformamid bei 20° C).

Herstellung eines erfindungsgemäß einzusetzenden Pfropfpolymerisats B gemäß EP-A-296403.

### 1. Herstellung eines Kernmaterials (a)

In einem Reaktor werden vorgelegt:

10.300 Teile Wasser, 5 Teile Na-Salz von $C_{14}-C_{18}$-Alkylsulfonsäuren, 800 Teile n-Butylacrylat und 4 Teile Triallylcyanurat. Nach Aufheizen auf 70° C wird die Polymerisation unter Rühren durch Zugabe einer Lösung von 30 Teilen Kaliumperoxodisulfat in 1.000 Teile Wasser initiiert. Anschließend werden innerhalb von 5 Stunden folgende Lösungen in den Reaktor bei 70° C eingespeist:

| | |
|---|---|
| Lösung 1: | 9.150 Teile n-Butylacrylat<br>46 Teile Triallylcyanurat |
| Lösung 2: | 7.000 Teile Wasser<br>200 Teile Na-Salz von $C_{14}-C_{18}$-Alkylsulfonsäuren |

Danach wird innerhalb von 4 Stunden bei 70 °C auspolymerisiert. Es wird ein Latex erhalten, der einen Feststoffgehalt von 35,9 %, einen pH-Wert von 3,2 und eine mittlere Teilchengröße ($d_{50}$-Wert) von 0,18 µm aufweist. Das Polymerisat ist teilvernetzt und besitzt einen Gelgehalt von 89 %, gemessen in DMF. Die Glastemperatur des Kernmaterials beträgt -48 °C.

2. Herstellung von Kautschukteilchen B.2 (a + b)

In einem Reaktor werden unter Stickstoffatmosphäre vorgelegt:
200 Teile Acrylatlatex (1)
5 Teile Octamethylcyclotetrasiloxan.

Die Reaktionsmischung wird auf 85 °C erwärmt und zwei Stunden gerührt.

Nach Zugabe einer Lösung von 1,5 Teilen Dedecylbenzolsulfonsäure und 1,5 Teilen $C_{12}-C_{14}$-Alkylsulfonsäure-Natriumsalz in 125 Teilen Wasser wird eine Stunde bei 85 °C nachgerührt. Anschließend wird eine Mischung aus 95 Teilen Octamethylcyclotetrasiloxan, 2,5 Teile Tetramethyltetravinylcyclotetrasiloxan innerhalb von 2 Stunden eindosiert, Die Polymerisation wird innerhalb 24 Stunden bei 80 °C zu Ende geführt und die gebildete stabile Emulsion (Latex 2) auf Raumtemperatur abgekühlt. Sie enthält das Mehrphasenpolymerisat in einer Konzentration von 36 %. Die Teilchengröße beträgt 0,15 µm. Das Polymerisat ist teilvernetzt, der Gelgehalt beträgt 87 %. Es besteht aus 40 % Acrylatkautschuk und 60 % Organopolysiloxan.

3. Pfropfpolymerisat B (B.2 + B.1)

In einem Reaktor werden vorgelegt:
2.089 Gew.-Teile Latex (2)
1.070 Gew.-Teile Wasser
Nach Initiierung mittels einer Lösung von 7,5 Gew.-Teilen Kaliumperoxodisulfat in 195 Gew.-Teilen Wasser bei 65 °C werden folgende Lösungen in den Reaktor innerhalb von 4 Stunden gleichmäßig eingespeist:

| | |
|---|---|
| Lösung 1: | 540 Gew.-Teile Styrol<br>210 Gew.-Teile Acrylnitril |
| Lösung 2: | 375 Gew.-Teile Wasser<br>15 Gew.-Teile Natriumsalz von $C_{14}-C_{18}$-Alkylsulfonsäuren |

Anschließend wird innerhalb von 4 Stunden bei 65 °C auspolymerisiert. Der Monomerumsatz beträgt mehr als 98 Gew.-%. Es resultiert ein Latex mit einem Feststoffgehalt von ca. 33 Gew.-%. Nach Koagulation mit einer wäßrigen Magnesiumsulfat-Lösung, Filtration und Trocknung im Vakuum wird das Pfropfpolymerisat in Form eines weißen Pulvers erhalten. Der Kautschukgehalt beträgt 50 Gew.-%.

4. Vergleichspfropfpolymerisat B*

Ein ASA-Pfropfpolymerisat aus 60 Gew.-% grobteiligem, hochvernetztem Acrylatkautschuk und 40 Gew.-% einer Styrol-Acrylnitril-Mischung im Gewichtsverhältnis 72 : 28 mit einer mittleren Teilchengröße ($d_{50}$) von ca. 400 nm. Das Produkt wurde durch Emulsionspolymerisaten nach bekanntem Verfahren hergestellt, wie z.B. in EP 34 748 (S. 8 ff) beschrieben.

5. Herstellung der erfindungsgemäßen Formmassen

Die Komponenten A), B) und C) wurden in einem 3-1-Innenkneter bei Temperaturen von 200 - 220 °C compoundiert.

Die Formkörper wurden auf einer Spritzgießmaschine bei 260 ° C hergestellt.

Die Kerbschlagzähigkeit wurde nach Methode Izod an Stäben der Abmessung 63,5 x 12,7 x 3,175 mm (2,5 x 1/2 x 1/8") gemäß ASTM – D – 256 gemessen.

Wie nachfolgende Tabelle zeigt, besitzen die erfindungsgemäßen Formmassen bei gleichem Gesamtkautschukgehalt ein deutlich höheres Zähigkeitsniveau als die des Vergleichsversuchs, insbesondere bei tiefen Temperaturen. Die Witterungsbeständigkeit beider Formmassen ist gut.

| Komponenten | | | | Kerbschlagzähigkeit (J/m) | | |
|---|---|---|---|---|---|---|
| A | B | B* | C | Raumtemperatur | -20° C | -50° C |
| **erfindungsgemäß** | | | | | | |
| 60 | 24 | | 16 | 737 | 531 | 474 |
| **Vergleich** | | | | | | |
| 60 | | 20 | 20 | 620 | 287 | - |

Der Gesamtkautschukgehalt beider Einstellungen beträgt jeweils 12 Gew. – %.

## Patentansprüche

**1.** Thermoplastische Polycarbonatformmassen, enthaltend

A) 52 bis 94 Gew. – % eines oder mehrerer Polycarbonate und

B) 6 bis 48 Gew. – % eines oder mehrerer teilchenförmiger Pfropfpolymerisate, dadurch gekennzeichnet, daß die Pfropfpolymerisate hergestellt sind aus

B.1 20 bis 90 Gew. – Teilen einer Polymerisat – Pfropfauflage aus wenigstens einem $\alpha,\beta$ – ungesättigten, olefinischen Monomer auf

B.2 80 bis 10 Gew. – Teile einer Pfropfgrundlage mit Kern/Mantel – Struktur, bestehend aus einem Kern a) aus kautschukartigem Polymerisat aus olefinisch ungesättigten Monomeren mit einer Glastemperatur (Tg) < 0 ° C und einem Hüllenpolymerisat (Mantel) b) aus Organopolysiloxan, wobei das Gewichtsverhältnis des Kerns a) zur Hülle b) 0,1 : 99,9 bis 90 : 10 beträgt und wobei die Pfropfpolymerisate B) einen mittleren Teilchendurchmesser ($d_{50}$) von 0,05 bis 10 $\mu$m besitzen und wobei die Summe der Gew. – Teile aus B.1 und B.2 stets 100 Gew. – Teile ergibt.

**2.** Thermoplastische Polycarbonatformmassen gemäß Anspruch 1, dadurch gekennzeichnet, daß der Kern a) im Pfropfpolymerisat B) eine Glastemperatur von < – 20 ° C hat.

**3.** Formmassen gemäß Ansprüche 1 und 2, dadurch gekennzeichnet, daß maximal die Hälfte der Gewichtsprozente der Komponente A) durch andere Thermoplasten C) ersetzt ist, wobei die Summe der Gewichtsprozente aus den Komponenten A) + B) + C) jeweils 100 Gew. – % ist.

**4.** Formmassen gemäß Anspruch 3, dadurch gekennzeichnet, daß C) ein thermoplastisches Copolymerisat ist aus

C.1 50 bis 95 Gew. – Teilen Styrol, $\alpha$ – Methyl – Styrol, kernsubstituiertem Styrol, Methylmethacrylat oder Mischungen daraus und

C.2 50 bis 5 Gew. – Teilen (Meth)Acrylnitril, Methylmethacrylat, Maleinsäureanhydrid, N – substituiertem Maleinimid oder Mischungen daraus, wobei die Summe der Gew. – Teile aus C.1 und C.2 jeweils 100 beträgt.

5. Formmassen gemäß Ansprüche 1 bis 4, dadurch gekennzeichnet, daß im Pfropfpolymerisat B) das Gewichtsverhältnis des Kerns a) zur Hülle b) 10:90 bis 50:50 beträgt.

6. Formmassen gemäß Ansprüche 1 bis 5, dadurch gekennzeichnet, daß der mittlere Teilchendurchmesser ($d_{50}$) von 0,1 µm bis 2 µm ist.

7. Formmassen gemäß Anspruch 6, dadurch gekennzeichnet, daß der mittlere Teilchendurchmesser ($d_{50}$) von 0,1 µm bis 1 µm ist.

8. Formmassen gemäß der Ansprüche 1 bis 7, dadurch gekennzeichnet, daß sie zusätzlich Stabilisatoren, Pigmente, Entformungsmittel, Flammschutzmittel und/oder Antistatika enthalten.

9. Verfahren zur Herstellung der Formmassen der Ansprüche 1 bis 8, dadurch gekennzeichnet, daß man die Komponenten A), B) und gegebenenfalls C), Stabilisatoren, Pigemente, Entformungsmittel, Flammschutzmittel und/oder Antistatika vermischt und dann bei Temperaturen von 200 °C bis 330 ° in gebräuchlichen Vorrichtungen schmelzcompoundiert oder schmelzextrudiert.

**Claims**

1. Thermoplastic polycarbonate moulding compounds containing
   A) 52 to 94% by weight of one or more polycarbonates and
   B) 6 to 48% by weight of one or more particulate graft polymers,
   characterized in that the graft polymers are prepared from
   B.1 20 to 90 parts by weight of a polymer graft shell of at least one $\alpha,\beta$-unsaturated olefinic monomer on
   B.2 80 to 10 parts by weight of a graft base having a core/shell structure consisting of a core a) of rubber-like polymer of olefinically unsaturated monomers having a glass temperature (Tg) of < 0 °C and a shell polymer (shell) b) of organopolysiloxane, the ratio by weight of the core a) to the shell b) being from 0.1:99.9 to 90:10 and the graft polymers B) having an average particle diameter ($d_{50}$) of 0.05 to 10 µm and the sum of the parts by weight of B.1 and B.2 always amounting to 100 parts by weight.

2. Thermoplastic polycarbonate moulding compositions as claimed in claim 1, characterized in that the core a) in the graft polymer B) has a glass temperature of < −20 °C.

3. Moulding compositions as claimed in claims 1 and 2, characterized in that at most half the percentages by weight of component A) is replaced by other thermoplastics C), the sum of the percentages by weight of components A) + B) + C) always amounting to 100% by weight.

4. Moulding compositions as claimed in claim 3, characterized in that C) is a thermoplastic copolymer of
   C.1 50 to 95 parts by weight styrene, $\alpha$-methyl styrene, nucleus-substituted styrene, methyl methacrylate or mixtures thereof and
   C.2 50 to 5 parts by weight (meth)acrylonitrile, methyl methacrylate, maleic anhydride, N-substituted maleic imide or mixtures thereof, the sum of the parts by weight of C.1 and C.2 always amounting to 100.

5. Moulding compositions as claimed in claims 1 to 4, characterized in that the ratio by weight of core a) to the shell b) in the graft polymer B) is from 10:90 to 50:50.

6. Moulding compositions as claimed in claims 1 to 5, characterized in that the average particle diameter ($d_{50}$) is from 0.1 µm to 2 µm.

7. Moulding compositions as claimed in claim 6, characterized in that the average particle diameter ($d_{50}$) is from 0.1 µm to 1 µm.

8. Moulding compositions as claimed in claims 1 to 7, characterized in that they additionally contain stabilizers, pigments, mould release agents, flameproofing agents and/or antistatic agents.

**9.** A process for the production of the moulding compositions claimed in claims 1 to 8, characterized in that components A), B) and, optionally, C), stabilizers, pigments, mould release agents, flameproofing agents and/or antistatic agents are mixed and the resulting mixtures are melt-compounded or melt-extruded in standard machines at temperatures of 200 to 330 °C.

## Revendications

**1.** Matières à mouler thermoplastiques à base de polycarbonates, contenant

A) 52 à 94 % en poids d'un ou plusieurs polycarbonates et

B) 6 à 48 % en poids d'un ou plusieurs polymères greffés en particules, caractérisées en ce que les polymères greffés sont produits à partir de

B.1 20 à 90 parties en poids d'un polymère dérivé d'au moins un monomère oléfinique à non-saturation $\alpha,\beta$ greffé sur

B.2 80 à 10 parties en poids d'un substrat de greffage à structure noyau/enveloppe, constitué d'un noyau a) formé d'un produit de polymérisation, analogue à un caoutchouc, de monomères à non-saturation oléfinique ayant une température (Tg) de transition vitreuse inférieure à 0 °C et d'un polymère enveloppant (enveloppe) b) dérivé d'un organopolysiloxanne, le rapport en poids du noyau a) à l'enveloppe b) ayant une valeur de 0,1:99,9 à 90:10 et les polymères de greffage B) ayant un diamètre moyen ($d_{50}$) des particules de 0,05 à 10 $\mu$m, et la somme des parties en poids de B.1 et B.2 étant toujours égale à 100 parties en poids.

**2.** Matières à mouler thermoplastiques à base de polycarbonates suivant la revendication 1, caractérisées en ce que le noyau a) dans le polymère greffé B) a une température de transition vitreuse inférieure à -20 °C.

**3.** Matières à mouler suivant les revendications 1 et 2, caractérisées en ce que la moitié, au maximum, des pourcentages en poids du composant A) est remplacée par d'autres matières thermoplastiques B), la somme des pourcentages en poids des composants A) + B) et C) étant dans chaque cas égale à 100 % en poids.

**4.** Matières à mouler suivant la revendication 3, caractérisées en ce que C) est un copolymère thermoplastique dérivé de

C.1 50 à 95 parties en poids de styrène, d'$\alpha$-méthylstyrène, de styrène substitué sur le noyau, de méthacrylate de méthyle ou de mélanges de ces monomères et

C.2 50 à 5 parties en poids de (méth)acrylonitrile, de méthacrylate de méthyle, d'anhydride d'acide maléique, de maléimide substitué sur l'azote ou de mélanges de ces monomères, la somme des parties en poids de C.1 et C.2 s'élevant dans chaque cas à 100.

**5.** Matières à mouler suivant les revendications 1 à 4, caractérisées en ce que le rapport en poids du noyau a) à l'enveloppe b) dans le polymère greffé B) a une valeur de 10:90 à 50:50.

**6.** Matières à mouler suivant les revendications 1 à 5, caractérisées en ce que le diamètre moyen ($d_{50}$) des particules va de 0,1 $\mu$m à 2 $\mu$m.

**7.** Matières à mouler suivant la revendication 6, caractérisées en ce que le diamètre moyen ($d_{50}$) des particules va de 0,1 $\mu$m à 1 $\mu$m.

**8.** Matières à mouler suivant les revendications 1 à 7, caractérisées en ce qu'elles contiennent en outre des agents stabilisants, des pigments, des agents de démoulage, des retardateurs de flamme et/ou des agents antistatiques.

**9.** Procédé de production des matières à mouler suivant les revendications 1 à 8, caractérisé en ce qu'on mélange les composants A), B) et le cas échéant C), des agents stabilisants, des pigments, des agents de démoulage, des retardateurs de flamme et/ou des agents antistatiques et on formule le mélange à l'état fondu ou on l'extrude à l'état fondu à des températures de 200 à 330 °C dans des dispositifs usuels.